# EUROPEAN PATENT APPLICATION

(11) **EP 1 609 373 A1**
(43) Date of publication of application: **28.12.2005**
(21) Application number: 05076442.2
(22) Date of filing: 21.06.2005
(51) Int. Cl.: A23K 1/165, A23K 1/14

(54) **Method for the enzymatic treatment of a vegetable material, the vegetable material obtained thereby, a method for preparing a feed product and the feed product obtained thereby.**

(30) Priority: 25.06.2004 NL 1026501
(71) Applicant: Coöperatie Cehave Landbouwbelang U.A., 5462 GG Veghel (NL)
(72) Inventor: de Bot, Petrus Hubertus Marie, 5467 KR Veghel (NL)
(74) Representative: Valkonet, Rutger

(57) **Abstract**

The present invention relates to a method for the enzymatic treatment of a vegetable material, which vegetable material is mixed with water and hydrolysed in the presence of one or more enzymes that are capable of decomposing plant cell walls. The present invention also relates to a vegetabl material that has been treated with one or more enzymes that are capable of decomposing plant cell walls.

## Description

The present invention relates to a method for the enzymatic treatment of a vegetable material, which vegetable material is mixed with water and hydrolysed in the presence of one or more enzymes that are capable of decomposing plant cell walls. The present invention also relates to a vegetable material that has been treated with one or more enzymes that are capable of decomposing plant cell walls. The present invention furthermore relates to a method for preparing a feed product having an increased nutritional value and to the feed product obtained by using said method.

A method for the enzymatic treatment of vegetable material is known from International application WO 02/079260, which relates to the treatment of grain fibres through alkaline hydrolysis in the presence of a hemicellulose ferulate esterase in an aqueous medium. A drawback of this method is that the product is obtained in the form of an aqueous solution. Consequently, the product must first be isolated from the water before it can be used, which is disadvantageous from an energetic point of view. In addition to that, excessive temperatures may occur during the additional dehydration step, which will have an adverse effect on the hydrolysed vegetable material.

US patent No. 5,662,901 relates to a grain conditioner comprising a pectinase, a beta-glucanase, an amylase and a hemicellulase.

European patent application No. 0 286 056 relates to a procedure for treating feed raw material with an enzyme preparation, wherein the material is subjected to hydrothermal and enzymatic treatments at a temperature below 100 °C, so that the enzymatic activity is retained.

US patent No. 5,198,252 relates to a method for the manufacture of fodder from aquatic plants, which plants are comminuted and mixed with about 20 - 70 wt.% of organic waste material of the food industry, inoculating agents and additives.

International application WO 98/18345 relates to the use of enzymes for promoting the absorption of pigments present in the feed by an animal, wherein a carbohydrase and/or protease are used as the enzymes.

The publication by A. A. Onilude from the magazine "World Journal of Microbiology & Biotechnology" relates to the use of an enzyme mixture of amylase, cellulase and pectinase on grains that are used as chick feed.

Chinese patent application CN 1,183,916 relates to the preparation of fish feed having a moisture content of 13-14 %.

Japanese patent application JP 56032952 relates to treatment of straw, using NaOH and heat, to obtain straw having a moisture content of 10-20 %, after which cellulase is added to obtain a feed product.

It is an object of the present invention to provide a method for producing an enzyme-treated vegetable material that is suitable for direct use.

Another object of the present invention is to provide a feed product having an increased nutritional value.

One or more of the above objects are achieved by using the method as defined in the preamble, which is characterized in that water is added to the vegetable material in such an amount that the mixture to be hydrolysed has a moisture content of 20-50 wt.%.

The present inventors have discovered that it is possible to treat vegetable material enzymatically in a reaction mixture having a low moisture content, viz. maximally 50 wt.%. Implementation of this method leads to a product having a moisture content that is substantially equal to the moisture content prior to the reaction, viz. maximally 50 wt.%. Consequently it is not necessary to isolate or dehydrate the product before it can be used, for example as a component of a feed product. In a special embodiment it is possible to further dehydrate the vegetable product obtained to a predetermined moisture content by using the method according to the present invention.

The enzymatic cleaving results in an increased nutritional value of the vegetable material. Cell walls consisting of, for example, pectin, cellulose and hemicellulose have a low nutritional value. When the vegetable material is treated with enzymes in advance, the components of the cell walls, such as pectin, cellulose and hemicellulose, will be converted into sugars, such as xylose, arabinose, galactose, mannose, rhamnose and the like. Treatment causes the cell wall material to be changed such that additional proteins and energy-supplying compounds become available from the hydrolysed vegetable material. The addition of such a vegetable material to a feed product will result in a feed product having added value both from an energetic and from an economic point of view.

Preferably, the mixture to be hydrolysed has a moisture content of 30-40 wt.%, since such a value leads to an optimum equilibrium between an optimum enzymatic activity and a final product having an acceptable moisture content.

The enzymes that are used are preferably selected from the group consisting of cellulases, hemicellulases and pectinases, or one or more combinations thereof. It should be noted in this connection that said enzymes exhibit additional activity besides their intended function, so that hemicellulase enzymes also exhibit cellulase and pectinase activity to some extent, and vice versa.

The enzymatic hydrolysis must be carried out at the temperature at which the enzyme is active. With the enzymes as mentioned above, said temperature ranges from about 5 °C to about 90 °C, preferably from 40 to 70 °C. Research carried out by the present inventors has shown that in particular a temperature ranging between 40 and 70 °C provides the best results as regards reaction rate and conversion. At temperatures below 5 °C there will be hardly any enzymatic activity. Temperatures in excess of 90 °C will lead to rapid deactivation of the enzyme, so that such temperatures are not desirable.

The method according to the present invention can be carried out at a pH-value of 3-9, in particular 4-7. Such a temperature range provides an optimum effect of the enzymes.

The enzymatic hydrolysis can be carried out for at least 5 hours. It is also possible, however, to carry out the reaction for a period of less than 5 hours, in which case the conversion will be insufficient, however. If the reaction is carried out for a period of more than 100 hours, no further significant increase in the yield will be possible.

It is in particular advantageous to carry out the enzymatic hydrolysis for a period of 24 to 48 hours. It has been shown that the enzymatic activity is highest during the first 24 hours, whereas the maximally attainable conversion is not obtained after 24 hours yet. It will be apparent to those skilled in the art, however, that the reaction time will depend on other factors as well, such as the pH-value, the temperature and also the proportions used in the reaction mixture, which factors can be adapted by a person skilled in the art.

The present invention also relates to a vegetable material that has been treated with one or more enzymes that are capable of decomposing plant cell walls, characterized in that the material has a moisture content of maximally 50 wt.% and in that one or more decomposition products of cell walls are present in an amount of at least 0.001 wt.%.

The present product is suitable for direct further use without an additional step, for example a dehydration step, being required first. The product has been treated with enzymes that are capable of decomposing plant cell walls, and consequently decomposition products of cell walls are present in the product. Said decomposition products are present in statically significant values, e.g. amounting to about 0.1 wt.%. Said amount may be higher or lower, however, depending on the materials that are used. The presence of such decomposition products of cell walls is evidence that an enzymatic cleaving has taken place rather than merely random degradation through heating. Hereinafter a more detailed explanation will be given of the methods that can be used for determining the presence of such decomposition products.

It is in particular preferable for the vegetable material to have a moisture content of 30-40 wt.%, since such a value provides the best possibilities for direct further processing of the material.

The present invention also relates to a method for preparing a feed product, wherein the hydrolysed vegetable material obtained by using the method according to the present invention is mixed with one or more components selected from the group consisting of vegetable materials, animal fats, vegetable oils and additives.

Examples of vegetable materials that can be used in the present invention are: wheat, oat, barley, rye, tapioca, maize, potato, rice, molasses, vinasses, soya meal, sunflower seed meal, rapeseed meal.

The animal fats and the vegetable oils that are used are not restricted to specific kinds, all the fats and oils that are known to those skilled in this field of the art can be used for this purpose.

The additives that are used are not restricted to specific kinds, all the additives that are known to those skilled in this field of the art can be used. Examples of suitable additives are: minerals, enzymes, vitamins, antooxidants, colourants, flavourings, carotenoids, synthetic amino acids, organic acids, coccidiostatics, antimicrobial growth agents, trace elements and veterinary medicines.

The composition of the feed product according to the present invention will depend on the food requirements of the animal to be fed. A person skilled in this field of the art will vary the composition such that the composition optimally meets the requirements of the animal. This may vary according to the type of animals, e.g. pigs, cows, horses, chickens and the like, and according to the age, health and the like of the animals to be fed.

The present invention also relates to a feed product obtained by using the method as described above, characterized in that the feed product comprises 1-25 wt.% of the present hydrolysed vegetable material. The amount of hydrolysed material that is added depends on the requirements of the animals and is calculated such that a more balanced ration composition is obtained. An added amount of less than 1 wt.% is not sufficiently effective and will not be desirable, therefore. An amount in excess of 25 wt.% will lead to overdosing. Preferably, the hydrolysed material is added in an amount of 5-15 wt.%, since this value will lead to the most balanced ration composition.

Other embodiments of the present invention are defined in the subclaims.

The present invention will be explained in more detail hereinafter by means of a description of the methods used and a number of non-limitative examples.

### Methods.

### Determination of the in vitro ileal organic matter digestibility.

The degree of enzymatic digestion can be determined in order to assess the progress of the enzymatic hydrolysis reaction. Said degree of enzymatic digestion is determined by determining the so-called "in vitro ileal organic manner digestibility" (to be referred to below as "digestibility"). The first step in this method is to determine the total amount of organic matter of a specific material. The following formula is used for this purpose: total amount of organic manner = 100 % - water percentage - ash percentage. The water percentage is defined as and determined from the weight loss of the material to be analysed as a result of the dehydration thereof at 103 °C for 4 hours. The ash percentage is determined as the residue that remains after heating at 550 °C to a constant weight for at least 2 hours. The digestability is expressed as a percentage of the total amount of organic material and is measured as follows. The determination of the in vitro ileal organic matter digestibility takes place by imitating the digestion in the intended animal's stomach and intestine up to the end of the small intestine (= ileum) as best as possible. The conditions are imitated by suitably adjusting the pH-value, the temperature, the residence time and the enzymes that are present in the digestive tract. This method is comparable with methods that are known to those skilled in this field of the art, for example as described in Metz, S.H.M. and van der Meer, J.M. in Proc. 3rd Int. Sem. on Digestive physiology in the pig, Copenhagen, 16 May 1985, and in Babinszky L. et al., an In-Vitro method for prediction of the Digestible Crude Protein content in Pig Feeds; J. Sci. Food. Agric. 50 (1990) pp 173-178.

The difference in the digestibility between the vegetable starting material and the hydrolysed product is represented in percentage points (e.g. a difference in the digestibility from 30 % to 40 % means 10 percentage points). It is especially preferable that the increase of the digestibility be as high as possible, since this will lead to an improved utilisation of the material when it is fed to an animal.

### Methods for determining the decomposition products of cell walls present in the vegetable material.

The two methods as described below can be used for determining whether or not a specific vegetable material has been subjected to enzymatic hydrolysis with enzymes capable of decomposing plant cell walls. Possible decomposition products of plant cell walls are sugars, e.g. xylose, arabinose, galactose, mannose and rhamnose. However, a large variety of other products known to those skilled in this field of the art may be present in the form of decomposition products. Certain sugars, such as glucose, may occur naturally in the vegetable material, as will become apparent hereinafter.

### Method 1.

The aforesaid sugars can be identified by means of an HPLC technique, using pulsed amperometric detection. This analysis technique is known to those skilled in this field of the art and will not be explained in more detail, therefore. An experiment that was carried out for determining the formation of free monosaccharides, using different dosages of the enzyme, is shown in Example 6.

### Method 2.

A second method of demonstrating the occurrence of an enzymatic cleaving of plant cell walls is to study the characteristic cleaving patterns of certain enzymes. It is possible to use the aforesaid HPLC technique with pulsed amperometric detection for this purpose, but it is also possible to use other HPLC methods, such as HPSEC (High Performance Size-Exclusion Liquid Chromatography) and HPAEC (High Performance Anion Exchange Chromatography). Such a chemical characterization of decomposition products is known to those skilled in this field, and the known cleaving patterns can be compared to the cleaving patterns that are obtained in the present invention. The occurrence of an enzymatic cleaving can be demonstrated by means of such known patterns.

### Examples.

### Example 1. Enzymatic treatment of palm kernel flakes.

391.5 g of palm kernel flakes having a digestibility of 26.8 % were mixed with 108.5 g of water and 0.01 % of the enzyme mannanase (Econase MP 1000). The mixture was then heated to a temperature of 60 °C. The mixture to be hydrolysed had a moisture content of 298 g/kg (29.8 wt.%). The mixture was maintained at a temperature of 60 °C for a period of 72 hours. At certain points in time (12, 14, 48 and 72 hours) during the reaction, the degree of enzymatic hydrolysis was determined by determining the digestibility and comparing it with the digestibility of the starting material (26.8 %). From the results it appeared that the digestibility was 34.4 % after 12 hours, 35.3 % after 24 hours, 38.4 % after 48 hours and 38.1 % after 72 hours. From these results it is apparent that a maximum conversion is achieved after 48 hours, and that a further continuation of the reaction will not result in additional conversion.

### Example 1. Enzymatic treatment of palm kernel flakes.

357.9 g of palm kernel flakes having a digestibility of 30.6 % were mixed with 142.1 g of water and 0.01 % of the enzyme mannanase (Econase MP 1000). The mixture was then heated to a temperature of 60 °C. The mixture to be hydrolysed had a moisture content of 346 g/kg (34.6 wt.%). The mixture was maintained at a temperature of 60 °C for a period of 48 hours. Following this, the degree of the enzymatic hydrolysis was determined by determining the digestibility. From the results it appeared that a relative increase of the digestibility of 5.5 percentage points had been obtained.

### Example 3. Influence of the moisture content.

The method of Example 2 was repeated, with this difference that the moisture content of the mixture to be hydrolysed was varied by varying the amount of water that was added. Experiments were carried out with palm kernel flakes, using moisture content levels from 30 to 70 %. From the results it is apparent that the degree of enzymatic hydrolysis increases as the moisture content increases. An increase in the moisture content from 30 % to 70 % leads to an increase of the digestibility from 25.7 % to 53.6 %. The processing of the product or the running and silo characteristics depend on the degree of water binding of the treated batch of palm kernel flakes. A moisture content of maximally 50 wt.% is generally preferred.

Besides the moisture content, also the so-called water activity (a_{w}) is relevant. The water activity indicates the equilibrium situation between the material to be assessed and the relative moisture saturation of the air. It is a measure of the interaction between the moisture content and the degree of moisture binding to the material to be assessed, or a measure of the amount of freely available water. The water activity is measured at 35 °C, using the method described by de Vos, H., Voedingsmiddelentechnologie 1976, Vol. 9 pp 10-11. The lower the moisture content, the lower a_{w} will be. Pure water has a water activity of 1, whilst a water activity in the order of 0.98 - 0.99 is generally measured in the case of a wet slurry. If the value is less than 0.9, the material will easily be assessed as being "dry", and thus resistant to microbial and enzymatic attack. The method according to the present invention requires a low moisture content, i.e. maximally 50 wt.%. Said moisture content is connected with the water activity, and consequently it is also important that the water activity of the hydrolysed vegetable material be low, so that a hydrolysed vegetable material which is not a wet slurry but which will be assessed as being "dry" is obtained directly after the reaction.

### Example 4. Influence of the reaction temperature.

A) The method of Example 2 was repeated, with this difference that palm kernel flakes having a digestibility of 27.6 % were used as the starting material. Furthermore, the reaction temperature was varied from 60, 70, 80 to 90 °C. From the results it is apparent that at temperatures in excess of 60 °C the in vitro ileal organic manner digestibility decreases from 34.5 % at 60 °C to 26.8 % at 90 °C.
B) The method of Example 2 was repeated, with this difference that palm kernel flakes having a digestibility of 30.6 % were used as the starting material and that the amount of added enzyme was 0.1 % rather than 0.01 %. Furthermore, the reaction temperature was varied from 40 to 60 °C. From the results it is apparent that at temperatures varying from 40 to 60 °C the in vitro ileal organic manner digestibility increases from 44.4 % to 50.4 %.

From the above results of experiments A and B it is apparent that a satisfactory enzymatic activity is obtained at temperatures between 40 and 60 °C; at temperatures in excess of 70 °C, however, said enzymatic activity decreases. A temperature between 55 and 65 °C is preferred.

### Example 6. Determination of the formation of free monosaccharides with different enzyme concentrations.

The method of Example 1 was repeated, with this difference that rapeseed meal was used instead of palm kernel flakes and that β-glucanase (available from Lodes-Croklaan) was used as the enzyme. The reaction was carried out at a temperature of 39 °C and a pH-value of 5.0 for a period of 24 hours. The amount of enzyme was varied from 0 to 0.2 wt.%, and the formation of monosaccharides arabinose, xylose+mannose, galactose and glucose was determined by using the above-described Method 1. The results are shown in Table 1 below.

**Table 1**

| amount of enzyme (wt.%) | Amount of free monosacharides (wt.%) | | | |
|---|---|---|---|---|
| | arabinose | xylose+ mannose | galactose | glucose |
| 0 | nd* | nd* | n** | 0.013 |
| 0.0005 | nd* | 0.001 | 0.001 | 0.019 |
| 0.002 | 0.005 | 0.003 | 0.003 | 0.031 |
| 0.008 | 0.018 | 0.007 | 0.008 | 0.071 |
| 0.040 | 0.052 | 0.011 | 0.033 | 0.122 |
| 0.200 | 0.149 | 0.019 | 0.200 | 0.234 |

| | | | | |
|---|---|---|---|---|
| *) nd: not demonstrable, i.e. below the detection limit, which is 0.001 wt.% in this case. | | | | |

From the results of Table 1 it will be apparent that free glucose is already present in the control experiment (0 wt.% enzyme added), and consequently glucose is less suitable for demonstrating the occurrence of enzymatic hydrolysis in this example. However, neither arabinose nor xylose+mannose or galactose are present in the control experiment, whereas they are present in the vegetable material that is subjected to enzymatic hydrolysis; consequently, the presence of these monosaccharides in amounts in excess of the detection limit (0.001 wt.% in this case) is indicative of the fact that enzymatic hydrolysis has actually occurred.

The above method was also carried out with the enzyme mannanase and palm kernel flakes as the starting material, with an amount of free mannose monomers of 2.2 wt.% being identified, whilst mannose only occurs in the form of linear mannanes in untreated palm kernel flakes.

## Claims

1. A method for the enzymatic treatment of a vegetable material, which vegetable material is mixed with water and hydrolysed in the presence of one or more enzymes that are capable of decomposing plant cell walls, **characterized in that** water is added to the vegetable material in such an amount that the mixture to be hydrolysed has a moisture content of 20-50 wt.%.

2. A method according to claim 1 **characterized in that** the mixture to be hydrolysed has a moisture content of 30-40 wt.%.

3. A method according to any one or more of the claims 1-2, **characterized in that** the enzymes are selected from the group consisting of cellulases, hemicellulases and pectinases, or one or more combinations thereof.

4. A method according to any one or more of the claims 1-3, **characterized in that** the enzymatic hydrolysis is carried out at a temperature ranging from 5 to 90 °C.

5. A method according to claim 4 **characterized in that** the enzymatic hydrolysis is carried out at a temperature ranging from 40 to 70 °C.

6. A method according to any one or more of the claims 1-5, **characterized in that** the enzymatic hydrolysis is carried out at a pH-value of 3 to 9.

7. A method according to claim 6 **characterized in that** the enzymatic hydrolysis is carried out at a pH-value of 4 to 7.

8. A method according to any one or more of the preceding claims, **characterized in that** the enzymatic hydrolysis is carried out for at least 5 hours.

9. A method according to claim 8 **characterized in that** the enzymatic hydrolysis is carried out for 24 to 48 hours.

10. A vegetable material that has been treated with one or more enzymes that are capable of decomposing plant cell walls, **characterized in that** the material has a moisture content of maximally 50 wt.% and **in that** one or more decomposition products of cell walls are present in an amount of at least 0.001 wt.%.

11. A vegetable material according to claim 10, **characterized in that** the vegetable material has a moisture content of 30-40 wt.%.

12. A method for preparing a feed product, wherein the hydrolysed vegetable material obtained by using the method according to any one or more of the claims 1-11 is mixed with one or more components selected from the group consisting of vegetable materials, animal fats, vegetable oils and additives.

13. A feed product obtained by using the method according to claim 12, **characterized in that** said feed product comprises 1-25 wt.% of the hydrolysed vegetable material.

14. A feed product according to claim 13, **characterized in that** said feed product comprises 5-15 wt.% of the hydrolysed vegetable material.
